Europäisches Patentamt

European Patent Office

Office européen des brevets

(19)

(11) Publication number: **0 102 108**
**B1**

# (12) EUROPEAN PATENT SPECIFICATION

(45) Date of publication of patent specification: **16.07.86**

(51) Int. Cl.⁴: **C 03 B 7/08**

(21) Application number: **83201121.7**

(22) Date of filing: **29.07.83**

(54) **Method and device for discharging controlled quantities of molten glass.**

(30) Priority: **30.08.82 NL 8203368**

(43) Date of publication of application:
**07.03.84 Bulletin 84/10**

(45) Publication of the grant of the patent:
**16.07.86 Bulletin 86/29**

(84) Designated Contracting States:
**BE DE FR GB**

(56) References cited:
**DE-B-1 596 476**
**DE-C- 454 537**
**DE-C-1 207 052**
**FR-A- 718 626**
**US-A-1 685 143**
**US-A-1 843 248**
**US-A-1 995 276**

(73) Proprietor: **N.V. Philips' Gloeilampenfabrieken**
**Groenewoudseweg 1**
**NL-5621 BA Eindhoven (NL)**

(72) Inventor: **Romberg, Hendrik**
**c/o INT. OCTROOIBUREAU B.V. Prof. Holstlaan 6**
**NL-5656 AA Eindhoven (NL)**

(74) Representative: **Melio, Jan Dirk et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a method and device for discharging controlled quantities of molten glass from a discharge reservoir provided with at least one discharge orifice, a discharge plunger being movable towards and away from the or each discharge orifice and a pin being arranged coaxially with the centre of the or each discharge orifice, which pin is movable in its axial direction.

A device for discharging controlled quantities of molten glass from a discharge reservoir is described in DE—C—454 537. These devices mostly are connected to a duct or channel which is provided with a refractory coating and which extends between a glass furnace and a glass-processing machine. Sometimes the device is further provided with heating systems to keep the glass to be processed at a desired high temperature. The molten glass flows along the duct or channel to the discharge device and would then flow through the discharge reservoir and the discharge orifice(s) in a continuous stream to a further processing machine were it not for the presence of a vertically movable plunger in the discharge reservoir. This vertically movable plunger interrupts the glass stream and expels separate quantities of glass from the discharge orifice. When the plunger moves upwards, a restriction of the glass stream occurs, a shearing member being arranged at the relevant area to divide the glass stream into separate predetermined quantities of a size required for further processing. The size of the quantities can be further regulated by varying the movement of the plunger, for example, the stroke and the speed, or by varying the form and the cross-sectional area of the plunger.

In this known device, problems arise when glasses of very low viscosity have to be processed. A glass of low viscosity will flow from the discharge orifice again soon after the operation of the shearing member. In order to avoid this as far as possible and to compensate for the decreasing pumping effect, a plunger having a large cross-sectional area is required. Although it is thereby achieved that the glass is held back sufficiently at the discharge orifice by the upward movement of the plunger, the low viscosity of the glass gives rise to the additional phenomenon that the surface tension of the glass in the discharge orifice can no longer prevent air from ascending through the glass, whereupon glass flows out of the space between the wall of the discharge orifice and the plunger. It is then no longer possible to control the quantity of glass discharged.

This problem has already been described in DE—C—1 207 052, in which it is proposed to solve this problem by providing an excess pressure below the discharge orifice in the periods in which there is no outflow of glass, if desired in combination with a pin temporarily closing the discharge orifice.

This known device has the disadvantage that it has a complicated construction, requiring a pressure chamber and a closure pin between the discharge orifice and the further processing machine.

A further device for discharging controlled quantities of molten glass, especially glass of low viscosity, is described in DE—B—1 596 476. In this device the discharge reservoir is provided with a discharge orifice having the shape of a rather long tube whereas the inlet of this tube can be closed and opened respectively by means of a control pin.

US—A—1 685 143 discloses a device for discharging charges of molten glass having a discharge reservoir with a discharge orifice. In the discharge reservoir there is arranged a plunger which moves towards and away from the discharge opening whereas in the discharge opening there is arranged a tapered pin which is axially adjustable so as to close to a variable extent the discharge opening. In this way it is possible to vary the discharge amount of glass by adjusting the pin and without varying the stroke length of the plunger.

The invention has for its object to provide a method and device of the kind mentioned above, in which the undesired outflow of glass is prevented by simple and compact means.

According to the invention, the method is characterized in that during a first phase the discharge plunger and the pin are moved towards the discharge orifice together whereas during a second phase the plunger moves in the opposite direction away from the discharge orifice while the pin remains substantially stationary, and at the end of the second phase the direction of movement of the plunger is reversed and the pin is moved away from the discharge orifice, whereupon the first phase can start again.

A device for carrying out the method according to the invention is characterized in that it comprises control means for moving the plunger and the pin in the described sequence.

According to one embodiment in which the reservoir is provided with only one discharge orifice and one discharge plunger the discharge plunger is arranged coaxially with the centre of the discharge orifice and is provided with a central axial bore in which the movable pin extends.

In another embodiment, in which there is a plurality of discharge orifices in the discharge reservoir, one or more discharge plungers is or are arranged beside the pins arranged coaxially with the centres of the relevant orifices.

In this way it is possible with constructionally simple means to vary the size of the discharge opening as desired during the discharge cycle so that an undesired discharge of glass is prevented and air bubbles cannot ascend in the glass.

The invention will be described more fully with reference to the drawings.

Figures 1a—1e show diagrammatically a glass-discharge device with one discharge orifice at various stages in the discharge process;

Figures 2a and 2b show diagrammatically a glass-discharge device with two discharge orifices;

Figure 3 shows diagrammatically a mechanism for actuating the moving parts of the devices shown in Figures 1 and 2.

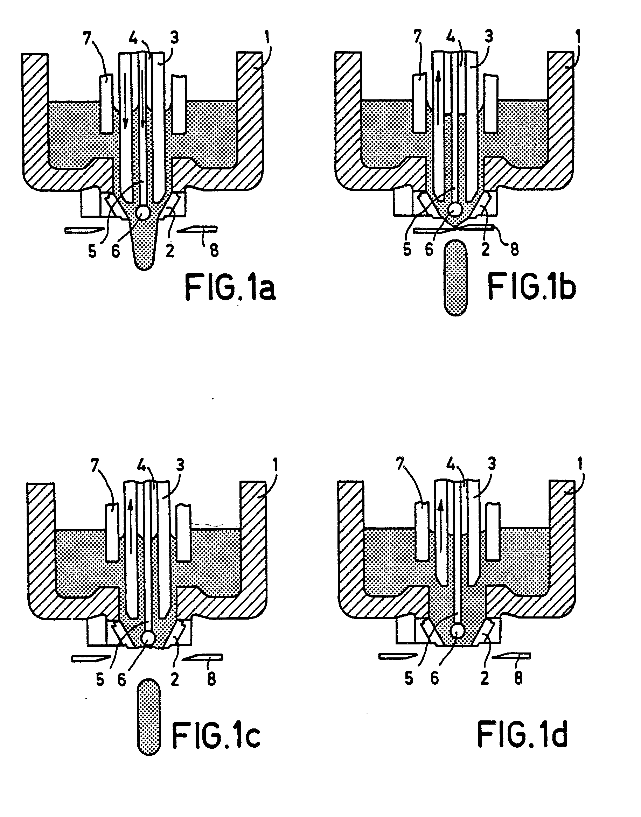

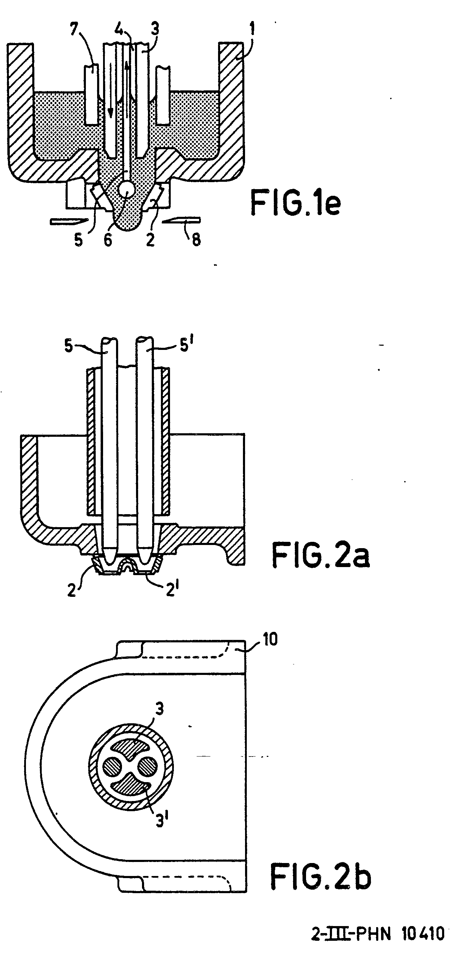

In Figure 1, reference numeral 1 designates a discharge reservoir, which can be connected in a manner not shown to a glass furnace which supplies molten glass to the reservoir. The reservoir 1 is provided with a discharge orifice 2. In the reservoir 1 is arranged a vertically movable discharge plunger 3. This plunger 3 is provided with a central axial bore 4 in which extends a closure pin 5 which at its end adjacent the discharge orifice 2 is provided with an enlarged head 6. A rotatable cylinder 7 surrounds the discharge plunger, which cylinder serves to agitate the glass melt. Instead of being provided with a rotatable cylinder, the device may alternatively be provided with a stationary cylinder, in which case separate agitating means are additionally provided.

Below the discharge orifice 2 is arranged a shearing member 8 which serves to divide the outflowing glass into separate predetermined quantities.

The operation of this device is as follows. In the situation shown in Fig. 1a, the discharge plunger 3 and the closure pin 5 moves downwards together towards the discharge orifice, as a result of which a quantity of glass melt is discharged through the orifice 2. At the end of this stroke of the plunger 3 and pin 5 the direction of movement of the plunger 3 is reversed but the closure pin 5 remains in a position in which its head 6 partly closes the discharge orifice. When the plunger 3 moves upwards, the flow of glass is restricted and the discharged quantity of glass can be cut off by the shearing member 8. This is shown in Figure 1b.

Figure 1c illustrates how the plunger 3, as it moves further upwards, exerts a sufficient suction effect on the glass to prevent glass from flowing out of the restricted discharge orifice.

Figure 1d shows the situation in which the discharge plunger has completed its upward stroke. The direction of movement of the plunger is then reversed again, as is shown in Figure 1e, while at the same time the closure pin is pulled upwards so that the discharge orifice is freed and the process can be repeated.

Thus, a comparatively simple measure, namely, the addition of a closure pin which completely or partly closes the discharge orifice during the upward movement of the discharge plunger, results in a device whereby a glass melt of low viscosity can be discharged in controlled quantities of the desired size at the desired speed. An undesired discharge of glass melt or an undesired rising of air bubbles in the glass is thus prevented.

Figure 2 shows diagrammatically how a device with two discharge orifices 2 and 2' is provided with two vertically movable closure pins 5 and 5' and two discharge plungers 3 and 3' arranged parallel to the pins. The plungers 3 and 3' have a form considerably different from that of the plunger of Figure 1 but they have the same function and movement as the plunger of Figure 1. Again a cylinder 7 surrounds the plungers and closure pins, while Figure 2b shows in plan view how the device 1 can be connected *via* a flange 10 to the glass supply duct extending from the furnace. It should be noted that the plungers 3 and 3' may also form an integral part with one another.

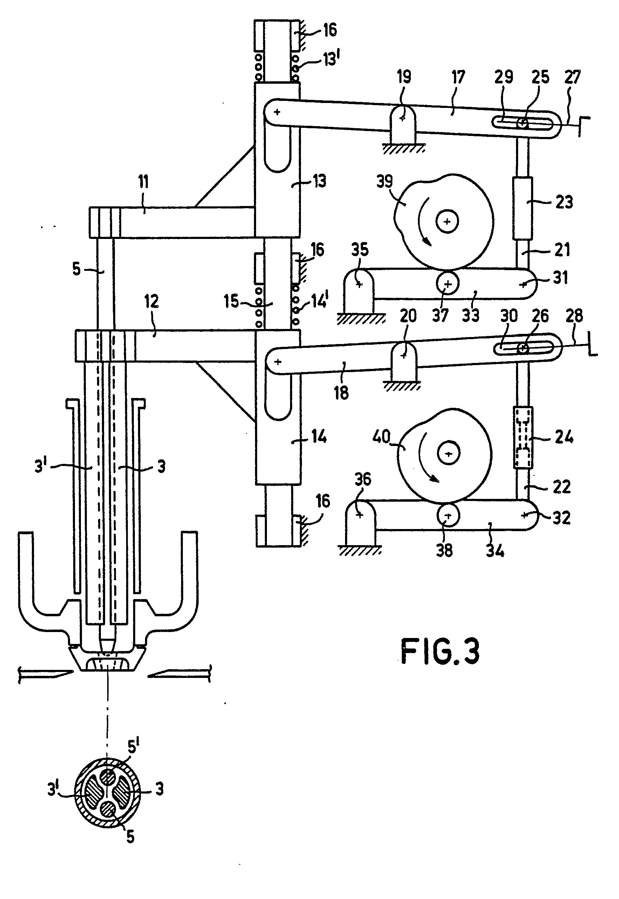

The discharge plungers 3 and 3' and the closing pins 5 and 5' can be actuated in the manner shown in Figure 3, for example.

This figure shows the same discharge reservoir as Figure 2, with two discharge orifices 2 and 2', movable closure pins 5 and 5' and movable discharge plungers 3 and 3'. The closure pins 5 and 5' are connected at their upper ends to a common yoke 11, while the discharge plungers 3 and 3' are supported by a common yoke 12. The yokes 11 and 12 are provided with sleeves 13 and 14, respectively, which are slidable on a rod 15 which is rigidly connected to a supporting frame at 16.

The sleeves 13 and 14 are pivotally connected to levels 17 and 18, respectively, which are pivotable about fixed axes 19 and 20, respectively, the sleeves being pushed downwards by springs 13' and 14'.

The levers 17 and 18 are each coupled to a rod 21 and 22, respectively, whose length is adjustable by means of a screw threaded sleeve 23 and 24, respectively.

The rods 21 and 22 are pivotally connected at one end to the levers 17 and 18, respectively through pins 25 and 26, respectively, the pins 25 and 26 being adjustable in slots 29 and 30, in the levers 17 and 18, respectively, by means of adjusting members 27 and 28, respectively.

At their other ends the rods 21 and 22 are pivotally connected at points 31 and 32, respectively, to levers 33 and 34, respectively, which are pivotable about fixed axes 35 and 36, respectively, and which through rollers 37 and 38, respectively, engage cam disks 39 and 40, respectively.

The cam disks 39 and 40 are both coupled to a drive which is not shown.

By rotation of the cam disks 39 and 40, the desired movements both of the closure pins 5 and 5' and of the discharge plungers 3 and 3' are obtained, the timing and duration of the movements being determined by the orifices of the cam disks.

The timing of the strokes of the closure pins and the discharge plungers can be adjusted by adjusting the length of the rods 21 and 22, respectively, by means of the sleeves 23 and 24, respectively. The lengths of the strokes can be varied by varying with the aid of the adjusting members 27 and 28, respectively, the positions of the hinge pins 25 and 26, respectively, in the slots 29 and 30, respectively.

**Claims**

1. A method for discharging controlled quantities of molten glass from a discharge reservoir (1) provided with at least one discharge orifice (2, 2'), a discharge plunger (3, 3') being movable towards and away from the or each discharge orifice and pin (5, 5') being arranged coaxially with the centre of the or each discharge orifice, which pin is movable in its axial direction, characterized in that during a first phase the discharge plunger (3, 3') and the pin (5, 5') are moved towards the discharge orifice (2, 2') together whereas during a second phase the plunger (3, 3') moves in the opposite direction away from the discharge orifice (2, 2') and the pin remains substantially stationary at the end of the second phase the direction of movement of the plunger (3, 3') is reversed and the pin (5, 5') is moved away from the discharge orifice (2, 2') whereupon the first phase can start again.

2. A device for discharging controlled quantities of molten glass from a discharge reservoir (1) according to the method described in claim 1, comprising at least one vertically movable discharge plunger (3, 3') arranged in the discharge reservoir (1) and at least one pin (5, 5') arranged coaxially with the centre of the or each discharge orifice (2, 2') which pin is movable towards and away from the respective discharge orifice so as to close the said orifice to a variable extent characterized in that the discharge plunger (3, 3') and the pin (5, 5') are both connected to control means (39, 40) by which the plunger and the pin can be moved towards and away from the discharge orifice (2, 2') in such a way that during a first phase the plunger and the pin are moved together towards the discharge orifice (2, 2') whereas during a second phase the plunger (2, 2') moves in the opposite direction away from the discharge orifice and the pin remains substantially stationary, at the end of which second phase the direction of movement of the plunger (3, 3') is reversed and the pin (5, 5') is moved away from the discharge orifice (2, 2') whereupon the first phase can start again.

3. A device as claimed in Claim 2, in which the discharge reservoir (1) is provided with only one discharge orifice (2) and one discharge plunger (3), and the discharge plunger (3) is arranged coaxially with the centre of the discharge orifice (2), the plunger (3) being provided with a central axial bore in which the movable pin (5) extends.

4. A device as claimed in Claim 2, in which the discharge reservoir (1) is provided with a plurality of discharge orifices (2, 2') and one or more discharge plungers (3, 3') is or are arranged beside the pins (5, 5'), which pins are arranged coaxially with the centres of the relevant orifices.

**Patentansprüche**

1. Verfahren zum Abgeben dosierter Mengen geschmolzenen Glases aus einem Ausströmungsbehälter (1) mit wenigstens einer Ausströmungsöffnung (2, 2'), einem Ausströmungskolben (3, 3'), der zu und von der oder jeder Ausströmungsöffnung beweglich ist, und einem Stift (5, 5'), der koaxial zur Mitte der oder jeder Ausströmungsöffnung angeordnet ist, wobei dieser Stift in axialer Richtung beweglich ist, dadurch gekennzeichnet, dass während einer ersten Phase der Ausströmungskolben (3, 3') und der Stift (5, 5') zusammen in Richtung der Ausströmungsöffnung (2, 2') bewegt werden, während in einer zweiten Phase der Kolben (3, 3') in der entgegengesetzten Richtung weg von der Ausströmungsöffnung (2, 2') bewegt wird und der Stift im wesentlichen am Platz bleibt, wobei am Ende der zweiten Phase die Bewegungsrichtung des Kolbens (3, 3') umgekehrt wird und der Stift (5, 5') weg von der Ausströmungsöffnung (2, 2') bewegt wird, wonach die erste Phase wieder anfangen kann.

2. Vorrichtung zum Abgeben dosierter Mengen geschmolzenen Glases aus einem Ausströmungsbehälter (1) nach dem Verfahren nach Anspruch 1, mit wenigstens einem vertikal beweglichen Ausströmungskolben (3, 3'), der in dem Ausströmungsbehälter (1) angeordnet ist, und mit wenigstens einem Stift (5, 5'), der koaxial zur Mitte der oder jeder Ausströmungsöffnung (2, 2') angeordnet ist, wobei dieser Stift zu und weg von der betreffenden Ausströmungsöffnung beweglich ist, um die genannte Öffnung in einem bestimmten Ausmass zu schliessen, dadurch gekennzeichnet, dass der Ausströmungskolben (3, 3') und der Stift (5, 5') beide mit Steuermitteln (39, 40) verbunden sind, durch die der Kolben und der Stift zu und weg von der Ausströmungsöffnung (2, 2') derart bewegt werden können, dass während einer ersten Phase der Kolben und der Stift zusammen in Richtung der Ausströmungsöffnung (2, 2') bewegt werden, während in einer zweiten Phase der Kolben (2, 2') in der entgegengesetzten Richtung weg von der Ausströmungsöffnung bewegt wird und der Stift im wesentlichen am Platz bleibt, wobei am Ende der zweiten Phase die Bewegungsrichtung des Kolbens (3, 3') umgekehrt wird und der Stift (5, 5') weg von der Ausströmungsöffnung (2, 2') bewegt wird, wonach die erste Phase wieder anfangen kann.

3. Vorrichtung nach Anspruch 2, dadurch gekennzeichnet, dass der Ausströmungsbehälter (1) mit nur einer Ausströmungsöffnung (2) und nur einem Ausströmungskolben (3) versehen ist und dass der Ausströmungsöffnung (2) vorgesehen ist, wobei der Kolben (3) mit einer zentralen axialen Borung versehen ist, in der sich der bewegliche Stift (5) erstreckt.

4. Vorrichtung nach Anspruch 2, dadurch gekennzeichnet, dass der Ausströmungsbehälter (1) mit einer Anzahl Ausströmungsöffnungen (2, 2') versehen ist und dass ein oder mehrere Ausströmungskolben (3, 3') neben den Stiften (5, 5') vorgesehen ist bzw. sind, wobei diese Stifte koaxial zu den Mitten der betreffende Öffnungen angeordnet sind.

**Revendications**

1. Procédé et un dispositif pour débiter des quantités côntrolées de verre fondu à partir d'un réservoir d'écoulement muni d'au moins un orifice d'écoulement, un plongeur étant animé de mouvements de va-et-vient à partir de l'orifice d'écoulement ou de chaque orifice d'écoulement et une broche étant prévue coaxialement par rapport au centre de l'orifice à décharge ou de chaque orifice d'écoulement, cette broche pouvant être déplacée dans sa direction axiale, caractérisé en ce que, lors d'une première phase, le plongeur doseur (3, 3') et la broche (5, 5') sont déplacés vers l'orifice d'écoulement (2, 2') alors que lors d'une deuxième phase, le plongeur (3, 3') se déplace dans la direction opposée de façon à s'écarter de l'orifice d'écoulement (2, 2') et la broche reste pratiquement stationnaire, à la fin de la deuxième phase, la direction de déplacement du plongeur (3, 3') est inversée, et la broche (5, 5') est écartée de l'orifice d'écoulement (2, 2'), après quoi la première phase peut commencer à nouveau.

2. Appareil pour débiter des quantitées contrôlées de verre fondu à partir d'un réservoir d'écoulement 1, selon le procédé décrit dans les revendications 1, comportant au moins un plongeur doseur pouvant être animé d'un mouvement vertical (3, 3') disposé dans le réservoir d'écoulement (1) et au moins une broche (5, 5') disposée coaxialement par rapport au centre de l'orifice d'écoulement ou des orifices d'écoulement (2, 2'), broche qui peut être animée de mouvements de va-et-vient par rapport à l'orifice d'écoulement respectif de façon à former ledit orifice dans une mesure variable, caractérisé en ce que le plongeur d'écoulement (3, 3') et la broche (5, 5') sont tous les deux reliés à des moyens de commande (39 et 40) à l'aide desquels le plongeur et la brosse peuvent être animés de mouvements de va-et-vient par rapport à l'orifice d'écoulement (2, 2') de façon que, lors d'une première phase, le plongeur doseur et la broche sont déplacés vers l'orifice d'écoulement (2, 2') alors que lors d'une deuxième phase, le plongeur (2, 2') se déplace dans la direction opposée de façon à s'écarter de l'orifice d'écoulement, tandis que la broche reste pratiquement stationnaire et, à la fin de la deuxième phase, la direction de déplacement du plongeur (3, 3') est inversée, et la broche est écartée de l'orifice (2, 2') d'écoulement, après quoi la première phase peut commencer à nouveau.

3. Dispositif selon la revendication 2, dans lequel le réservoir d'écoulement (1) est muni d'un seul orifice d'écoulement (2) et d'un seul plongeur doseur (3), et le plongeur doseur (3) est disposé coaxialement par rapport au centre de l'orifice d'écoulement (2), le plongeur (3) étant muni d'un alésage axial central dans lequel s'étend la broche mobile (5).

4. Dispositif selon la revendication 2, dans lequel le réservoir d'écoulement (1) est muni d'une pluralité d'orifices d'écoulement (2, 2') et un ou plusieurs plongeurs doseurs (3, 3') est ou sont disposés à côté des broches (5, 5'), broches qui sont disposées coaxialement par rapport aux centres des orifices en question.

0 102 108

FIG.1a

FIG.1b

FIG.1c

FIG.1d

1

FIG.1e

FIG.2a

FIG.2b

2-Ⅲ-PHN 10410

2

FIG.3